# DEMANDE DE BREVET EUROPEEN

(11) **EP 0 908 130 A1**
(43) Date de publication de la demande: **14.04.1999**
(21) Numéro de dépôt: 98420170.7
(22) Date de dépôt: 01.10.1998
(51) Int. Cl.: A47J 37/08

(54) **Grille-pain avec moyen de selection entre deux positions de dechargement du pain**

(30) Priorité: 07.10.1997 FR 9712731
(71) Demandeur: SEB S.A., 69130 Ecully (FR)
(72) Inventeur: Houel, Jean-Pierre, 88120 Saint ame (FR)

(57) **Abrégé**

- Grille-pain 1 comportant un chariot porte pain mobile entre une position de grillage et une première position de déchargement du pain, des premiers moyens d'amortissement de l'arrivée du chariot en sa première position, des moyens de rappel 17 du chariot montés entre le châssis 3 et une extension 6 du chariot, un moyen de commande 9 associé à une butée mobile et susceptible d'interrompre la remontée du chariot en une seconde position intermédiaire, caractérisé en ce que :
   - la seconde position intermédiaire est une seconde position de déchargement pour un format de pain usuel, la première position étant une position de déchargement pour un format de pain plus petit,
   - les moyens de commande ou, inversement, la partie du chariot interagissant avec les moyens de commande, comprennent des seconds moyens d'amortissement de l'arrivée du chariot en sa seconde position. La commande 9 fait saillie hors du bâti de l'appareil dans sa partie supérieure.

## Description

La présente invention se rapporte au domaine technique des appareils électroménagers de type grille-pain, et plus particulièrement aux grille-pain dont le chariot peut être amené en une position dite de remontée complémentaire, position destinée à la récupération des petites tranches de pain.

On connaît, par le document FR 2 729 285, un grille-pain disposant d'un ressort de rappel, la montée en position complémentaire étant effectuée, après la première remontée, par compression d'un deuxième ressort. Ce système nécessite un effort de la part de l'utilisateur susceptible de déstabiliser le grille-pain, et mobilise une des deux mains de l'utilisateur pour maintenir comprimé le ressort assurant la fonction de remontée plus, rendant l'opération de déchargement du pain délicate.

Par ailleurs, d'autres documents décrivent des systèmes permettant d'interrompre la remontée du chariot porte pain entre une position basse correspondant au grillage du pain et la position de repos du chariot, correspondant au déchargement du pain. Cette interruption permet, après un cycle de cuisson, de laisser le pain dans l'enceinte de grillage, chaude, pour éviter un refroidissement trop rapide du pain. Ainsi, le document US 2 330 644 décrit un grille-pain possédant une fonction de maintien au chaud des tranches de pain à l'intérieur de la chambre de grillage du grille-pain, par l'intermédiaire d'une lame pivotant dans un plan perpendiculaire au plan défini par le déplacement du chariot. Selon l'emplacement de cette lame, son extrémité permet d'empêcher la remontée du chariot. La commande du pivotement de la lame est assurée par un moyen externe situé sur le côté de l'appareil, au niveau de la position de maintien au chaud du chariot. Ce procédé ne permet cependant pas le déchargement du pain dans cette position intermédiaire.

Un des buts de la présente invention est de remédier aux inconvénients rencontrés dans les procédés existants en proposant un grille-pain possédant deux positions stables de déchargement du pain. Cette disposition évite à l'utilisateur de devoir maintenir un moyen de commande pour assurer la fonction de remontée plus, lui permettant ainsi de garder ses deux mains libres pour décharger le pain. Un autre but est de réaliser une fonction de remontée complémentaire du chariot porte pain de façon simple, peu encombrante et d'utilisation aisée.

Ainsi, la présente invention décrit un grille-pain comportant un chariot porte pain mobile entre une position de grillage et une première position de déchargement du pain, des premiers moyens d'amortissement de l'arrivée du chariot en sa première position, des moyens de rappel du chariot montés entre le châssis et une extension du chariot, un moyen de commande associé à une butée mobile dans le châssis du grille-pain et susceptible d'interrompre la remontée du chariot en une seconde position intermédiaire, caractérisé en ce que :
- la seconde position intermédiaire est une seconde position de déchargement pour un format de pain usuel, la première position étant une position de déchargement pour un format de pain plus petit,
- la butée ou, inversement, la partie du chariot interagissant avec la butée, comprend des seconds moyens d'amortissement de l'arrivée du chariot en sa seconde position.

Ainsi, la présente invention permet de positionner le chariot porte pain soit en une position classique de déchargement du pain, soit en une position supérieure de déchargement dite de "remontée plus", position stable, à l'aide d'un unique moyen de commande. La position naturelle de repos du chariot est la première position de remontée dite "remontée plus", la butée du moyen de commande étant alors susceptible d'entraver cette remontée en une seconde position de repos pour un déchargement classique du pain.

Par ailleurs pour chacune des positions possibles de déchargement, le chariot porte pain est amorti à son arrivée, ce qui évite aux tranches de pain d'être éjectées hors du grille-pain, tout en réduisant le bruit occasionné par l'immobilisation du chariot porte pain.

Selon l'invention, le moyen de commande, par l'une de ses extrémités, fait saillie hors du bâti dans sa partie supérieure et est associé à un système de repérage de la position de remontée du chariot. Le positionnement extérieur du moyen de commande sur le dessus du grille-pain permet une utilisation optimale de celui-ci, puisque l'utilisateur a, dans le même champ de vision, l'état du pain dans la chambre de cuisson ainsi que le moyen de commande de remontée complémentaire du chariot.

Selon l'invention, la butée est l'extrémité d'une tige verticale ou est une pièce agencée à l'extrémité d'une tige verticale, ladite tige étant solidaire d'une traverse horizontale pouvant être déplacée par le moyen de commande, ladite traverse ou ladite tige étant montée en translation horizontale dans un logement. Cette association permet de disposer simplement d'une butée, tout en permettant d'effectuer économiquement son déplacement.

Selon un premier mode de réalisation de la butée, celle-ci est constituée :
- d'un cylindre coulissant le long de la tige,
- d'un ressort d'amortissement agencé à l'intérieur du cylindre et coaxialement à la tige ou à son extrémité, ledit ressort étant en liaison mécanique, par l'une de ses extrémités, avec la tige ou une pièce solidaire de cette tige, et par son autre extrémité, avec la butée,
- d'un moyen d'arrêt du coulissement de ladite butée, composé de parties complémentaires en interaction, situées sur la tige et sur la butée. Un tel agencement permet de constituer une butée mobile à l'extrémité de la tige contre un moyen de rappel, constituant ainsi, dans un encombrement réduit, un moyen d'arrêt et d'amortissement de la remontée du chariot porte-pain.

Selon cette dernière configuration, le moyen d'arrêt est constitué par un tenon lié au cylindre de la butée engagé dans une rainure de la tige, ou inversement, par un tenon lié à la tige engagé dans une rainure du cylindre de la butée. Une telle liaison permet un coulissement guidé du cylindre tout en limitant l'amplitude du mouvement.

Selon un deuxième mode de réalisation de la butée, le moyen d'arrêt est constitué d'une collerette solidaire de la tige, l'une des extrémités du cylindre de la butée étant susceptible de prendre appui sur cette collerette lorsque la butée n'est pas en interaction avec l'extension du chariot porte pain, le ressort étant en liaison avec la tige par appui sur la partie inférieure de cette collerette. Cette disposition permet, par la seule collerette, de maintenir le cylindre autour de la tige, tout en bloquant le coulissement du ressort d'amortissement autour de ladite tige.

Selon une variante de réalisation de la présente invention, une échancrure est ménagée dans l'extension du chariot, ladite échancrure étant susceptible de coopérer avec la butée afin de permettre au chariot de remonter dans sa première position de déchargement du pain. Cette disposition permet de réduire l'encombrement généré par une telle fonction, en l'intégrant dans le chariot porte pain.

Selon un premier mode de réalisation de cette première variante, les premiers et seconds moyens d'amortissement du chariot sont situés sur le chariot porte pain, l'échancrure portant au moins les seconds moyens d'amortissement. Une telle variante permet de concevoir un système de tige et butée simple, ladite butée étant l'extrémité de la tige.

Selon un deuxième mode de réalisation, la profondeur de l'échancrure est telle que les seconds moyens d'amortissement constituent également les premiers moyens d'amortissement. Cette configuration permet d'économiser les pièces constituant les premiers moyens d'amortissement.

Selon l'une des configurations précédentes de l'invention, la tige est montée mobile contre un moyen de rappel de telle sorte qu'au repos, la butée assure la remontée du chariot selon l'une des deux positions de déchargement du pain. Ainsi, automatiquement, le chariot est arrêté dans l'une de ses positions de déchargement du pain, ce qui permet de simplifier le mode d'utilisation de l'appareil.

Dans une variante de la configuration précédente, ce n'est pas la tige qui est montée mobile mais la traverse, montée mobile contre un moyen de rappel de telle sorte qu'au repos, la butée assure la remontée du chariot selon l'une des deux positions de déchargement du pain, ledit moyen de rappel étant agencé coaxialement à ladite traverse qui constitue un guide pour ce moyen de rappel.

Avantageusement, le moyen de commande ou la traverse ou la tige disposent de moyens complémentaires avec le bâti aptes à maintenir le moyen de commande ou la traverse ou la tige selon une position s'opposant à la force exercée par le moyen de rappel, ladite position étant destinée à assurer la remontée du chariot selon l'une des deux positions de déchargement du pain. Cette disposition permet à l'utilisateur de pouvoir sélectionner le niveau de remontée du chariot alors que celui-ci est en position basse correspondant au grillage du pain, sans attendre la fin du cycle de cuisson.

Selon une première variante de réalisation du moyen de commande, dans une version simplifiée et économique de l'invention, le moyen de commande est solidaire de la traverse.

Selon une deuxième variante de réalisation du moyen de commande, ce dernier est désolidarisé de la traverse et est monté mobile sensiblement verticalement, selon l'axe x-x' de remontée du chariot porte pain, contre un moyen de rappel. Cette disposition, par un mouvement de haut en bas de ce moyen de commande, ne déstabilise pas le grille-pain lorsque le moyen est actionné. Par ailleurs, la transformation du mouvement vertical du moyen de commande en un mouvement horizontal de la tige permet un gain de place et facilite l'emplacement du dispositif dans le grille-pain.

Selon cette variante, le moyen de commande comporte, sur une extension latérale, un biseau en contact avec un doigt de la traverse liée à la tige, ledit biseau permettant, lors du déplacement du moyen de commande, le déplacement de la tige dans une direction perpendiculaire à la direction de remontée du chariot porte pain. Cette transformation du mouvement vertical du moyen de commande en mouvement horizontal de la tige s'effectue sans heurt grâce au biseau et permet de choisir aisément, par la pente donnée au biseau, l'amplitude du mouvement transmis à ladite tige.

Selon une troisième variante de réalisation du moyen de commande, celui-ci est lié à une pièce cylindrique comportant deux ergots périphériques et diamétralement opposés, ladite pièce étant montée mobile verticalement contre une force de rappel à l'intérieur d'un élément cylindrique comportant des saillies internes en forme de biseau agencées de telle manière à former des moyens d'arrêt et/ou de rétention desdits ergots selon 2 niveaux permettant de positionner le moyen de commande selon ces deux niveaux. L'utilisateur peut ainsi choisir, au cours de la cuisson du pain, le niveau de la remontée du chariot porte pain.

Selon une quatrième variante de réalisation du moyen de commande, celui-ci est une bascule dont l'axe de basculement est situé dans un plan perpendiculaire au plan défini par la remontée du chariot porte pain et comportant une tige orientée sensiblement perpendiculairement à cet axe et susceptible de coopérer avec le doigt. Cette configuration est simple à mettre en oeuvre et la remontée choisie est facilement identifiable par l'utilisateur. Par ailleurs, la bascule, lorsqu'elle est actionnée, ne déstabilise pas le grille-pain.

Selon cette dernière variante, le moyen de commande est situé à l'intérieur d'un support disposant d'un bossage formant un point dur susceptible de maintenir le moyen de commande, en liaison, par le doigt à la traverse selon une position s'opposant à la force exercée par le moyen de rappel, ladite position étant destinée à assurer la remontée du chariot selon l'une des deux positions de déchargement du pain. Cette configuration réunit les avantages décrits dans la réalisation précédente, tout en offrant une réalisation plus simple et plus économique.

La présente invention sera mieux comprise à la lecture de la description, en référence aux dessins annexés, donnés à titre d'exemples non limitatifs, dans lesquels :
- la figure 1 représente une vue en perspective d'un grille-pain conforme à la présente invention,
- la figure 2 représente une vue de face et en coupe de la partie supérieure d'un grille-pain conforme à l'invention,
- la figure 3 présente une vue de face et en coupe de la partie supérieure d'un grille-pain conforme à l'invention, avec un positionnement différent du chariot porte pain
- la figure 4 présente une vue de face et en coupe d'une variante de réalisation du moyen de commande, selon la première position stable de ce moyen,
- la figure 5 présente une vue de face et en coupe de cette même variante de réalisation du moyen de commande selon la deuxième position stable de ce moyen,
- la figure 6 présente une projection linéaire du profil présenté par l'une des pièces du dispositif,
- la figure 7 présente une vue de face et en coupe d'une autre variante de réalisation du moyen de commande.

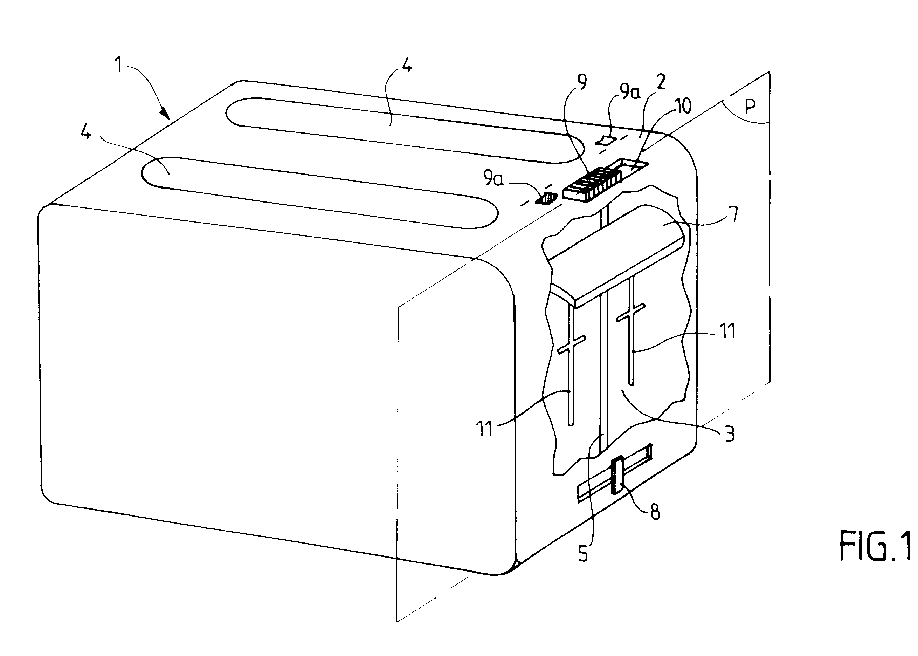

La figure 1 présente une vue en perspective d'un grille-pain 1 conforme à la présente invention. Sur cette vue, une partie du bâti 2 a été enlevée pour une meilleure compréhension des figures suivantes. Le grille-pain 1 comporte notamment, à l'intérieur du bâti 2, duquel est agencé un châssis 3, au moins une chambre de grillage à l'intérieur desquelles peut se déplacer un chariot porte pain, non représenté, guidé dans son déplacement par une tige 5. Une extension 6 de ce chariot, hors de la chambre de grillage, permet par un levier 7 faisant saillie hors du bâti de l'appareil, de positionner le chariot dans la position basse de grillage. Le grille-pain est, par ailleurs, équipé de moyens de réglage 8 du temps de cuisson.

Selon l'invention, le grille-pain est équipé d'un moyen 9 de commande de l'interruption de la remontée du chariot porte pain, ledit moyen faisant saillie hors du boîtier de l'appareil. Ce moyen peut être une pièce de forme quelconque, de préférence crantée afin d'être manipulée facilement. Dans un mode de réalisation de l'invention, ce moyen est monté sur une traverse 10 coulissant dans un logement ménagé dans le bâti 2 selon une direction perpendiculaire à l'axe de remontée du chariot porte pain. Le moyen de commande 9 est associé à un repérage 9a permettant à l'utilisateur de choisir entre les deux positions de remontée du chariot. Sur la partie éclatée de cette figure sont également visibles les fentes 11 permettant à l'extension du chariot porte pain de coulisser librement avec ledit chariot, hors de la chambre de cuisson.

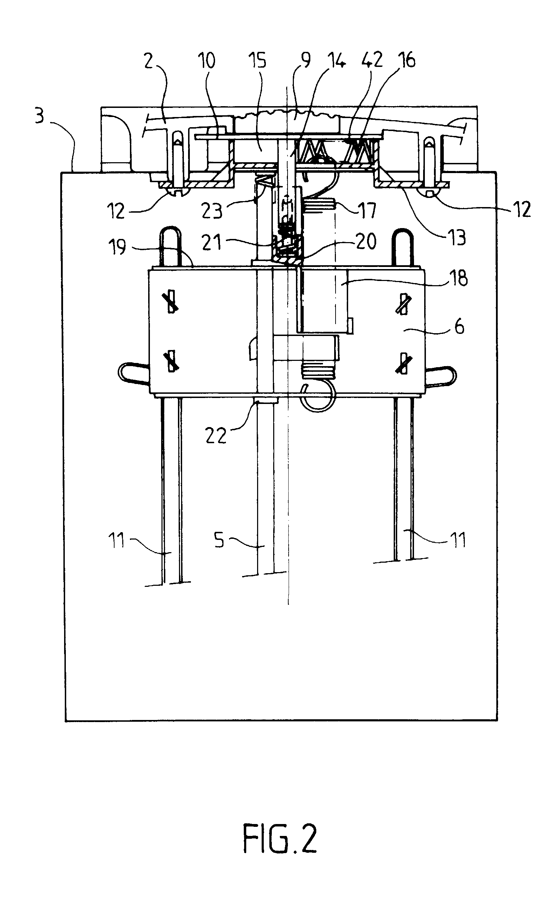

La figure 2 présente en une vue de face et en coupe selon le plan P de la figure 1, la partie haute du grille-pain, selon un premier mode de réalisation, où n'apparaissent que les éléments essentiels à la compréhension de l'invention. Ainsi, est mécaniquement fixé sur le châssis 3 du grille-pain, par l'intermédiaire de deux vis 12, le support 13 du dispositif de commande. A ce moyen de commande 9 sont reliés, de façon solidaire, une traverse 10 ainsi qu'une tige 14 de forme générale parallélépipédique ou cylindrique, agencée verticalement. Selon un mode de réalisation économique, la traverse 10 est courte et forme un L avec la tige 14.

Avantageusement, la tige 14 comporte, dans son prolongement, une butée 20. Cette butée 20 peut être, dans une version économique de réalisation de l'invention, l'extrémité de la tige 14, ou, comme présenté, une pièce indépendante reliée à la tige 14. Selon l'un des modes de réalisation de l'invention, la butée 20 est dotée d'un ressort 21 d'amortissement.

Dans l'exemple présenté de réalisation, la butée 20 est cylindrique, le ressort 21 est monté coaxial à l'intérieur du cylindre, autour de la tige 14, à l'extrémité de celle-ci. A cet endroit, la tige 14 est amincie, de telle manière à présenter un moyen de guidage dudit ressort tout en empêchant son coulissement vers le haut. La butée 20 est montée coulissante par un tenon dans une rainure de la tige 14. Il peut tout à fait être prévu un agencement inverse, où un tenon de la tige 14 est mobile dans une rainure de la butée cylindrique 20. La butée 20 et le ressort 21 permettent d'amortir la remontée du chariot selon la première position de déchargement du pain, lors de l'interaction de cette butée 20 avec l'extension 6 du chariot porte pain.

Un logement 15 est réalisé dans le support 13. Ce logement est partiellement évidé afin de permettre le libre coulissement de la tige 14 et de la traverse 10. Un ressort 16 est judicieusement disposé dans le logement 15 et assure la fonction de rappel du moyen de commande 9 par la tige 14.

Sur cette figure sont également présentées l'extension 6 du chariot porte pain, la tige de guidage 5 du chariot porte pain ainsi que les fentes 11 permettant aux éléments solidaires que sont le chariot porte pain et son extension 6, de coulisser verticalement dans la chambre de grillage. Un ressort 23 est monté coulissant sur la tige de guidage 5. L'une de ses extrémités est fixée à la partie supérieure du châssis 3. L'extension 6 du chariot porte pain comporte deux proéminences 22 annulaires situées de part et d'autre de cette extension, autour de la tige de guidage 5. Ces deux proéminences 22, réalisées par montée de matière de l'extension 6 assurent la fonction de guidage du chariot porte pain. Un ressort de rappel 17 permet de remonter le chariot porte pain, à la fin d'un cycle de cuisson, de sa position de grillage à la position de remontée la plus haute, cette dernière position étant en effet la position de repos du chariot porte pain. Ce ressort 17 est ainsi agencé sur le châssis 3 du grille pain et sur l'extension 6 du chariot porte pain.

Selon un mode particulier de réalisation de l'invention, une échancrure 18 est ménagée sur l'extension 6 du chariot porte pain. Cette échancrure est susceptible de coopérer avec la butée 20 équipée de son amortisseur, présentant donc une forme rectangulaire de dimension légèrement supérieure à l'encombrement latéral de la butée 20, de sorte que celle-ci, lors d'une position précise du moyen de commande, puisse librement s'engager dans cette échancrure 18. Selon une première configuration de l'invention, la profondeur de cette échancrure est telle que la butée 20, lorsqu'elle est engagée dans cette échancrure, n'entrave pas la remontée du chariot jusqu'à sa position de repos.

Le moyen de commande 9 permet donc de positionner la tige 14 selon au moins deux positions : la première permet à la butée 20 de s'engager librement dans l'échancrure 18 de l'extension 6 du chariot porte pain, autorisant ce dernier à remonter en position de remontée la plus haute, la deuxième position permet l'immobilisation du chariot porte pain en une position intermédiaire de déchargement du pain, par contact entre la face 19 de l'extension 6 et la butée 20 de la tige 14.

La figure 2 présente ainsi une telle situation où la position du moyen de commande 9 ne permet pas à la butée 20 de coulisser dans l'échancrure 18 : le chariot porte pain est alors immobilisé avant d'atteindre sa position de repos qui est la position de remontée la plus haute, par contact entre la butée 20 reliée à la tige 14 et l'extension 6, ce contact étant amorti par le ressort 21.

Il est bien sûr envisageable de concevoir toute autre configuration entre la butée 20 et l'extension du chariot porte pain 6 permettant d'aboutir à une interaction entre ces deux éléments uniquement lorsque le moyen de commande 9 est disposé selon l'une des deux positions, sans sortir du cadre de la présente invention. La remontée du chariot peut être arrêtée, par exemple, par contact entre la butée 20 et une simple lame ou la proéminence 22, la remontée en la position la plus haute s'effectuant par une remontée sans interaction entre la butée 20 et l'extension 6 du chariot, comme si le système d'arrêt n'existait pas.

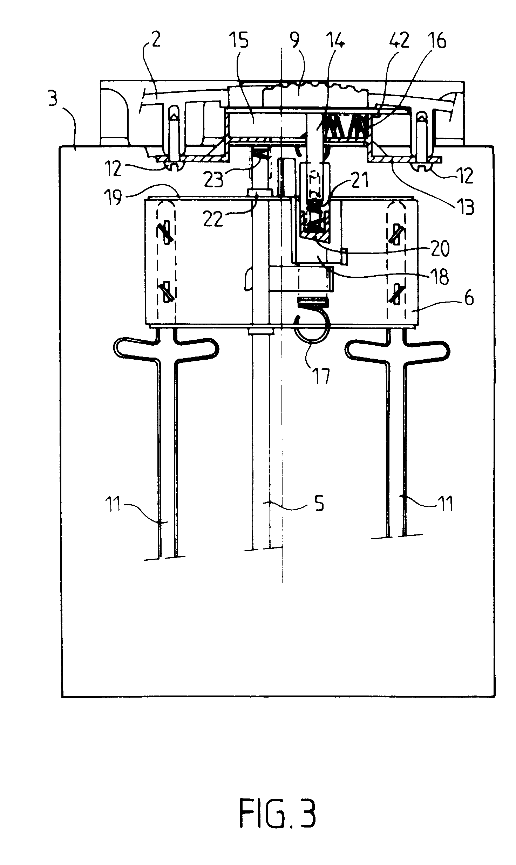

La figure 3 est une vue analogue à la figure 2, où le moyen de commande 9 est positionné, par l'utilisateur, de telle sorte que la butée 20 et son amortisseur puissent s'engager dans l'échancrure 18. Dans ce cas de figure, il n'y a pas d'interaction active entre la butée 20 et l'extension 6 du chariot porte pain, celui-ci remonte alors de sa position de grillage vers la position de remontée plus, où il est amorti et arrêté par le ressort 23 comprimé entre le support 13 et la proéminence 22 de la face 19 de l'extension 6.

Dans cette configuration, lorsque l'utilisateur abaisse à nouveau le chariot, la butée 20 n'est plus guidée par l'échancrure 18, de sorte que le ressort 16, comprimé dans le logement 15 lorsque la butée 20 est dans l'échancrure 18, se détend, et entraîne le coulissement de la tige 14 et donc du moyen de commande 9 vers une position telle que celle décrite à la figure 1. La butée 20 peut être chanfreinée afin d'adoucir le coulissement de la butée lors de la descente du chariot.

Cette configuration, à retour automatique du moyen de commande en position de déchargement standard du pain peut être inversée, en positionnant le ressort de façon symétrique par rapport à la tige 14. De cette manière, le retour du moyen de commande s'effectue automatiquement en une position autorisant la remontée du chariot en sa position la plus haute.

Dans une variante de cette réalisation, la traverse 10 du moyen de commande 9 dispose d'un bossage 42 susceptible de coopérer avec le bâti 2 ou le châssis 3 afin de maintenir le moyen de commande dans cette position, où le ressort 16 est légèrement comprimé. Cette configuration permet à l'utilisateur de choisir le type de remontée souhaitée, dès que le cycle de chauffage est enclenché par positionnement du chariot porte pain en position basse de grillage. Une telle coopération peut également être envisagée entre la traverse 27 et le bâti 2 ou entre la tige 14 et le bâti sans sortir du cadre de la présente invention.

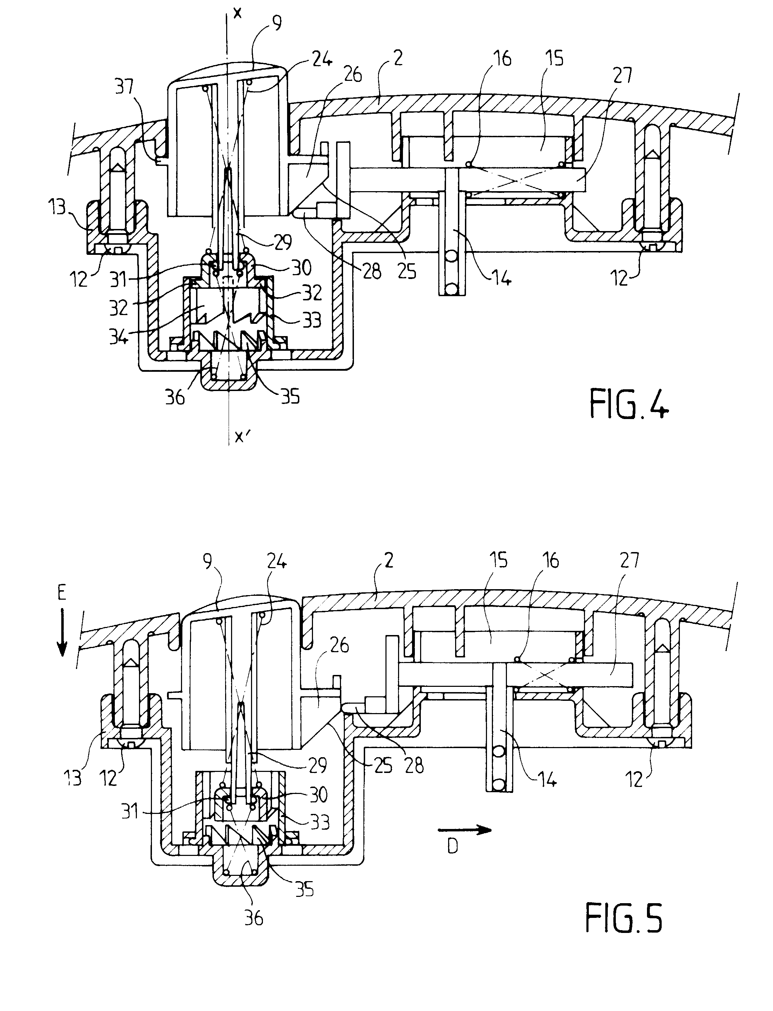

La figure 4 montre un deuxième mode de réalisation de la présente invention, où le déplacement latéral de la tige 14 s'effectue par un déplacement vertical du moyen de commande 9, ce dernier étant désolidarisé de la traverse 27. Ainsi cette figure 4 décrit une première variante de construction du moyen de commande 9.

Par ailleurs, la traverse 27 est solidaire de la tige 14, perpendiculairement à celle-ci, de telle sorte à former un T. Cette disposition en T, présente l'avantage, par rapport à la disposition en L, de pouvoir agencer facilement un ressort de compression 16 autour de la traverse 27 entre l'une de ses extrémités et la tige 14.

La traverse 27 comporte, à l'une de ses extrémités, un doigt 28. La disposition de la traverse 27 est telle que le doigt 28 est contigu au biseau 25. Préférentiellement, le ressort 16 est disposé, légèrement comprimé, à l'opposé du doigt 28, maintenu par la tige 14 et la géométrie du support. Cette disposition permet de maintenir le doigt 28 contre le biseau 25 en exerçant une légère pression sur ce dernier. Par ailleurs, le support 13 constitue, par sa forme, un guidage de la tige 14 et de la traverse 27 en limitant notamment le mouvement de la traverse 27 selon l'axe de remontée du chariot porte pain. La tige 14 porte, à son extrémité, une butée (non représentée) telle que précédemment décrite.

Le moyen de commande 9 est de forme générale cylindrique et peut coulisser verticalement selon l'axe x-x', parallèlement à l'axe de remontée du chariot porte pain. Ce mode particulier de déplacement permet de ne pas déstabiliser l'appareil lorsque le moyen 9 est actionné. Ce dernier est globalement disposé à l'intérieur du support 13, maintenu au bâti 2 par deux vis 12. Le moyen de commande 9 est creux et comporte un ressort 24 agencé autour d'un plot central 29 faisant saillie hors de ce moyen 9 selon l'axe x-x'. Sur une extension latérale 26 du moyen 9 est ménagé un biseau 25. Par ailleurs, une pièce cylindrique 30 est montée coulissante sur le plot 29. Ce dernier comporte, à son extrémité une butée 31 permettant de retenir la pièce 30. Celle-ci comporte, en outre, deux ergots périphériques 32, diamétralement opposés, de sorte que la pièce 30, ainsi constituée, peut coulisser à l'intérieur d'un cylindre 33 comportant, sur la face intérieure, des surépaisseurs constituant des saillies internes 34, 35 en forme de créneaux dans la partie supérieure au nombre de quatre ainsi qu'une couronne dentelée à sa base. Un ressort 36, disposé entre le support 13 et la butée 31, permet de maintenir la pièce cylindrique 30 en position supérieure dans le cylindre 33.

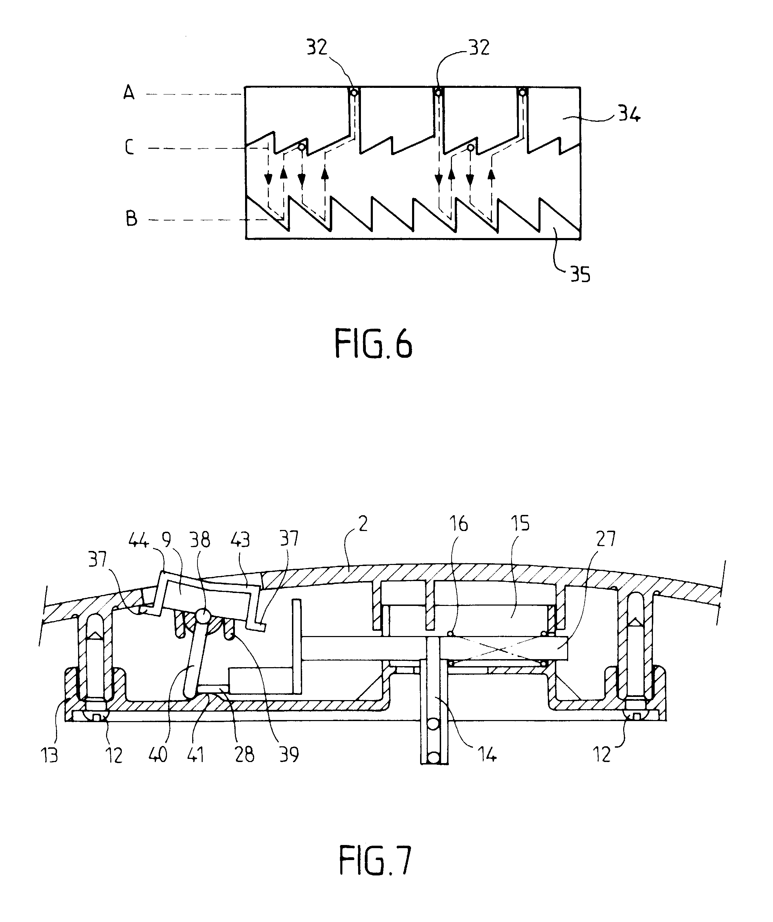

Les figures 4 et 5 permettent d'apprécier le principe de fonctionnement de cette variante de réalisation. Le principe est de déplacer latéralement la tige 14 et donc la butée en son extrémité, comme dans la configuration précédente, par un déplacement vertical du moyen de commande 9, celui-ci pouvant occuper deux positions stables. Les figures 4 et 5 montrent respectivement ces deux positions. Le déplacement vertical de ce moyen, selon l'axe x-x', fait glisser le doigt 28 sur le biseau 25, contre la force de compression du ressort 16. Le glissement du doigt 28 entraîne le déplacement de la tige 14 selon la direction D indiquée figure 5. Par action sur le moyen 9 selon la direction E, la pièce 30 est entraînée dans cette même direction. La figure 6, qui représente une projection linéaire du profil du cylindre 33, indique le cheminement de la pièce 30, via les ergots 32, lors d'appuis successifs sur le moyen de commande 9. D'autres variantes de réalisation des saillies internes 34 et 35 peuvent être envisagées sans sortir du cadre de la présente invention.

Ainsi, lorsque l'utilisateur appuie selon la direction E sur le moyen de commande 9, celui-ci entraîne la pièce 30 dans sa descente, les ergots 32, initialement à un niveau marqué A sur la figure 6, viennent se positionner au niveau B. La position initiale des ergots 32 au niveau A est réalisée par un positionnement judicieux des pièces 9, 30 et 33. Les ressorts 24 et 36 reliant ces différentes pièces sont légèrement comprimés, de sorte que la pièce 30 occupe le logement supérieur du cylindre 33, la pièce 9 par un ergot 37 et la pièce 26 étant en appui contre le bâti 2. Lorsque l'utilisateur relâche le moyen 9, le ressort 36 comprimé, se détend et tend à déplacer la pièce 30 dans la direction opposée à la direction E. La configuration des saillies internes 34 et 35 induit alors un positionnement de la pièce 30 au niveau C. Un nouvel appui sur le moyen de commande 9 permet aux ergots 32 de passer du niveau C au niveau B, le relâchement de le moyen 9 ramenant les ergots 32 au niveau A.

Ainsi, par appuis successifs sur le moyen de commande 9 selon la direction E, la pièce 30 passe alternativement du niveau A au niveau B, en effectuant entre ces niveaux, un quart de tour. Ce changement de niveau de la pièce 30 est transmis à la pièce 9 via la liaison par la butée 31 ainsi que par le ressort 24. Le moyen 9 peut ainsi occuper deux positions stables, correspondant au positionnement de la pièce 30 aux niveaux A et C. Le déplacement du moyen 9 entraîne un déplacement latéral du doigt 28, donc de la tige 14. Ainsi, cette tige, grâce au ressort 16 qui permet au doigt 28 d'exercer une pression sur l'extension 26 du moyen 9, peut occuper deux positions stables. L'une de ces deux positions correspond à la remontée du chariot en sa position la plus haute, l'autre correspond à un déchargement standard du pain, comme précédemment mentionné. Cette particularité permet à l'utilisateur de pouvoir choisir, lorsque le pain est encore dans sa phase de cuisson, l'une des deux positions de remontée du chariot porte pain, sans attendre le retour du chariot de sa position de grillage.

La figure 7 décrit un troisième mode de réalisation du grille-pain et plus précisément du moyen de commande 9. Celui-ci comporte, sur une partie située à l'extérieur du bâti, deux pentes 43 et 44 destinées à sélectionner l'une des deux positions stables du moyen 9. Celui-ci est articulé sur un axe 38 parallèle au chariot porte pain défini par un élément cylindrique, guidé par une pièce 39 liée au bâti 2. Le moyen de commande 9 peut ainsi pivoter autour de cet axe. Cette rotation est limitée par deux ergots 37 situés sur le moyen de commande et pouvant interagir avec le bâti 2. Le moyen de commande 9 est pourvu d'une tige 40 s'étendant de l'axe 38 vers le bas du grille-pain, perpendiculairement au moyen de commande 9 jusqu'à affleurer le support 13. Celui-ci comporte, sur sa face intérieure, un bossage 41 disposé de telle manière que la tige 40, selon la position du moyen de commande 9, soit située d'un côté ou de l'autre de ce bossage 41. Le dispositif comportant la tige 14 et la butée est le même que celui présenté dans la deuxième variante de réalisation, le doigt 28 étant en appui sur la tige 40, transversalement à celle-ci.

Ainsi le moyen 9, par rotation autour de l'axe 38, ne peut prendre que deux positions stables. La première est celle représentée figure 7, où le ressort 16, en position de repos ou très légèrement comprimé, maintient le moyen 9 dans la première position extrême où l'un des ergots 37 est en contact avec le bâti 2. La deuxième position est obtenue par franchissement du point dur par action sur la partie 44 du moyen de commande 9. Ce franchissement est possible par la plasticité de la tige 40 ainsi que du support 13. Ce point dur franchi, la tige 40 occupe une position stable, le ressort 16 contraignant la tige 40 contre le bossage 41. Ainsi, l'utilisateur, par action sur les pentes 43 ou 44 du moyen de commande 9, fait passer la tige 40 de part et d'autre du bossage 41. Cette action déplace latéralement le doigt 28 et donc la butée à l'extrémité de la tige 14 qui peut donc prendre deux positions stables correspondant aux deux positions de déchargement du pain, comme précédemment décrit.

Ainsi, dans une utilisation classique du grille-pain, l'utilisateur introduit ses tranches de pain dans les fentes 4 du grille-pain, abaisse le chariot porte pain jusqu'à sa position de grillage. Il peut alors choisir l'un des deux niveaux de remontée du chariot par appui sur le moyen de commande 9 ou sur une partie de celui-ci.

L'utilisation d'un tel grille-pain est alors simple et pratique puisqu'il est possible alors de régler au préalable le niveau de remontée du chariot porte pain.

La présente invention n'est limitée à cette seule description. En effet, il est possible de trouver de nombreuses variantes de réalisation entrant dans le cadre de l'invention. Ainsi, le moyen de commande peut être agencé de manière à être mobile par translation ou par rotation selon un axe quelconque sans sortir du cadre de la présente invention, où la butée décrit un parcours présentant au moins une position permettant l'interaction avec le chariot porte pain afin de l'arrêter selon la seconde position de déchargement du pain et au moins une position où le chariot porte pain peut remonter vers sa positon la plus haute dans le grille-pain.

De même, l'amortissement du chariot porte pain selon la première position de déchargement du pain peut être réalisé par un système à fuite d'air, communément appelé "dashpot", ou par un système visqueux.

Il peut également être prévu de disposer les deux moyens d'amortissement uniquement sur le chariot porte pain, par exemple en disposant un premier moyen dans l'échancrure 18 et un deuxième moyen hors de cette échancrure.

Afin de simplifier le système, une simple lame ressort peut être utilisée, permettant à la fois d'arrêter le chariot, tout en amortissant sa remontée. Un tel amortisseur peut être installé indifféremment, sur le chariot porte pain ou sur la butée.

Cet amortisseur peut également constituer les premiers moyens d'amortissement de la remontée du chariot porte pain en position haute de déchargement. En effet, agencé sur le chariot porte pain, dans l'échancrure 18 ou sur une extension latérale de l'extension 6, selon la présence ou non de la butée, cet amortisseur interviendra soit par interaction avec ladite butée, soit, lorsque celle-ci est retirée, avec le haut du bâti du grille-pain.

De même, il peut être prévu que l'amortisseur soit agencé sur la butée afin de constituer un amortissement de la remontée du chariot en position la plus haute dans le grille-pain. A cette fin, il est nécessaire de prévoir une interaction faible entre la butée et le chariot. Celle-ci, dans l'exemple proposé, peut être réalisée par l'échancrure 18, en réduisant sa profondeur afin de permettre une interaction entre la butée et le chariot, même lorsque le moyen de commande 9 est dans la position correspondant à la remontée du chariot vers sa position la plus haute.

Par ailleurs l'agencement entre le ressort 21, la butée 20 et la tige 14 peut présenter diverses variantes de réalisation, notamment en ce qui concerne le moyen d'arrêt du cylindre de la butée. Ce peut être une collerette liée à la tige 14, le cylindre présentant à son extrémité un rétrécissement ou un disque périphérique interne apte à arrêter le cylindre par appui sur la collerette. Selon cette configuration, le ressort est agencé sous la collerette, de telle manière à être comprimé par le coulissement vertical du cylindre de la butée lors de l'interaction de celle-ci avec l'extension 6 du chariot porte pain.

Il peut être envisagé également, afin de présenter un dispositif économique, de disposer un simple ressort dans le prolongement de la tige 14, maintenu mécaniquement à l'extrémité de cette tige, son autre extrémité assurant les fonctions de butée et d'amortissement de la remontée.

## Revendications

1. Grille-pain (1) comportant un chariot porte pain mobile entre une position de grillage et une première position de déchargement du pain, des premiers moyens d'amortissement de l'arrivée du chariot en sa première position, des moyens de rappel (17) du chariot montés entre le châssis (3) et une extension (6) du chariot, un moyen de commande (9) associé à une butée mobile dans le châssis du grille-pain et susceptible d'interrompre la remontée du chariot en une seconde position intermédiaire, caractérisé en ce que :
- la seconde position intermédiaire est une seconde position de déchargement pour un format de pain usuel, la première position étant une position de déchargement pour un format de pain plus petit,
- la butée ou, inversement, la partie du chariot interagissant avec la butée, comprend des seconds moyens d'amortissement de l'arrivée du chariot en sa seconde position.

2. Grille-pain selon la revendication 1, caractérisé en ce que le moyen de commande (9), par l'une de ses extrémités, fait saillie hors du bâti (2) dans sa partie supérieure et est associé à un système de repérage (9a) de la position de remontée du chariot.

3. Grille-pain selon l'une des revendications précédentes, caractérisé en ce que la butée (20) est l'extrémité d'une tige (14) verticale ou est une pièce agencée à l'extrémité d'une tige (14) verticale, ladite tige étant solidaire d'une traverse (10,27) horizontale pouvant être déplacée par le moyen de commande (9), ladite traverse ou ladite tige étant montée en translation horizontale dans un logement (15).

4. Grille-pain selon l'une des revendications précédentes, caractérisé en ce que la butée (20) est constituée :
- d'un cylindre coulissant le long de la tige (14),
- d'un ressort d'amortissement (21) agencé à l'intérieur du cylindre et coaxialement à la tige (14) ou à son extrémité, ledit ressort étant en liaison mécanique, par l'une de ses extrémités, avec la tige (14) ou une pièce solidaire de cette tige, et par son autre extrémité, avec la butée (20),
- d'un moyen d'arrêt du coulissement de ladite butée, composé de parties complémentaires en interaction, situées sur la tige (14) et sur la butée (20).

5. Grille-pain selon la revendication précédente, caractérisé en ce que le moyen d'arrêt est constitué par un tenon lié au cylindre de la butée (20) engagé dans une rainure de la tige (14), ou inversement, par un tenon lié à la tige (14) engagé dans une rainure du cylindre de la butée (20).

6. Grille-pain selon la revendication 4, caractérisé en ce que le moyen d'arrêt est constitué d'une collerette solidaire de la tige (14), l'une des extrémités du cylindre de la butée (20) étant susceptible de prendre appui sur cette collerette lorsque la butée n'est pas en interaction avec l'extension (6) du chariot porte pain, le ressort (21) étant en liaison avec la tige (14) par appui sur la partie inférieure de cette collerette.

7. Grille-pain selon l'une des revendications précédentes, caractérisé en ce qu'une échancrure (18) est ménagée dans l'extension (6) du chariot, ladite échancrure étant susceptible de coopérer avec la butée (20) afin de permettre au chariot de remonter dans sa première position de déchargement du pain.

8. Grille-pain selon la revendication précédente, caractérisé en ce que les premiers et seconds moyens d'amortissement du chariot sont situés sur le chariot porte pain, l'échancrure (18) portant au moins les seconds moyens d'amortissement.

9. Grille-pain selon l'une des revendications 7 ou 8, caractérisé en ce que la profondeur et/ou de l'échancrure (18) est telle que les seconds moyens d'amortissement constituent également les premiers moyens d'amortissement.

10. Grille-pain selon l'une des revendications 3 à 9, caractérisé en ce que la tige (14) est montée mobile contre un moyen de rappel (16) de telle sorte qu'au repos, la butée (20) assure la remontée du chariot selon l'une des deux positions de déchargement du pain.

11. Grille-pain selon l'une des revendications 3 à 9, caractérisé en ce que la traverse (27) est montée mobile contre un moyen de rappel (16) de telle sorte qu'au repos, la butée (20) assure la remontée du chariot selon l'une des deux positions de déchargement du pain, ledit moyen de rappel étant agencé coaxialement à ladite traverse qui constitue un guide pour ce moyen de rappel.

12. Grille-pain selon l'une des revendications précédentes, caractérisé en ce que le moyen de commande (9) ou la traverse (27) ou la tige (14) disposent de moyens complémentaires avec le bâti (2) aptes à maintenir le moyen de commande (9) ou la traverse (27) ou la tige (14) selon une position s'opposant à la force exercée par le moyen de rappel (16), ladite position étant destinée à assurer la remontée du chariot selon l'une des deux positions de déchargement du pain.

13. Grille-pain selon l'une des revendications précédentes, caractérisé en ce que le moyen de commande (9) est solidaire de la traverse (10).

14. Grille-pain selon l'une des revendications 1 à 12, caractérisé en ce que le moyen de commande (9) est désolidarisé de la traverse (27) et est monté mobile sensiblement verticalement, selon l'axe x-x' de remontée du chariot porte pain, contre un moyen de rappel (24).

15. Grille-pain selon la revendication précédente, caractérisé en ce que le moyen de commande (9) comporte, sur une extension latérale (26), un biseau (25) en contact avec un doigt (28) de la traverse (27) liée à la tige (14), ledit biseau (25) permettant, lors du déplacement de le moyen de commande (9), le déplacement de la tige (14) dans une direction perpendiculaire à la direction de remontée du chariot porte pain.

16. Grille-pain selon l'une des revendications 14 à 15, caractérisé en ce que le moyen de commande (9) est lié à une pièce cylindrique (30) comportant deux ergots périphériques (32) et diamétralement opposés, ladite pièce (30) étant montée mobile verticalement contre une force de rappel à l'intérieur d'un élément cylindrique (33) comportant des saillies internes (34, 35) en forme de biseau agencées de telle manière à former des moyens d'arrêt et/ou de rétention desdits ergots (32) selon 2 niveaux (A) et (C) permettant de positionner le moyen de commande (9) selon ces deux niveaux.

17. Grille-pain selon l'une des revendications 1 à 12, caractérisé en ce que le moyen de commande (9) est une bascule dont l'axe de basculement (38) est situé dans un plan perpendiculaire au plan défini par la remontée du chariot porte pain et comportant une tige (40) orientée sensiblement perpendiculairement à cet axe (38) et susceptible de coopérer avec le doigt (28).

18. Grille-pain selon la revendication précédente, caractérisé en ce que le moyen de commande (9) est situé à l'intérieur d'un support (13) disposant d'un bossage (41) formant un point dur susceptible de maintenir le moyen de commande, en liaison, par le doigt (28) à la traverse (27) selon une position s'opposant à la force exercée par le moyen de rappel (16), ladite position étant destinée à assurer la remontée du chariot selon l'une des deux positions de déchargement du pain.
